# EUROPEAN PATENT SPECIFICATION

(11) **EP 2 215 595 B1**
(45) Date of publication and mention of the grant of the patent: **22.02.2012**
(21) Application number: 08852692.6
(22) Date of filing: 13.11.2008
(51) Int. Cl.: G06Q 30/00

(54) **A PROCESS FOR THE ON-LINE DISTRIBUTION OF AUDIOVISUAL CONTENTS WITH ADVERTISEMENTS, ADVERTISEMENT MANAGEMENT SYSTEM, DIGITAL RIGHTS MANAGEMENT SYSTEM AND AUDIOVISUAL CONTENT PLAYER PROVIDED WITH SAID SYSTEMS**
EIN PROZESS FÜR DIE ON-LINE-VERTEILUNG DES AUDIOVISUELLEN INHALTS MIT REKLAMEANZEIGEN, REKLAMEANZEIGENMANAGEMENTSSYSTEM, DIGITALRECHTMANAGEMENTSYSTEM UND AUDIOVISUELLEM CONTENTSPIELER VERSEHEN MIT BESAGTEN SYSTEMEN
PROCESSUS POUR LA DISTRIBUTION EN LIGNE DE CONTENUS AUDIOVISUELS AVEC DES PUBLICITÉS, SYSTÈME DE GESTION DE PUBLICITÉS, SYSTÈME DE GESTION DE DROITS NUMÉRIQUES ET LECTEUR DE CONTENU AUDIOVISUEL POURVU DESDITS SYSTÈMES

(30) Priority: 23.11.2007 ES 200703089
(43) Date of publication of application: 11.08.2010
(73) Proprietor: Media Patents S.L., 08011 Barcelona (ES)
(72) Inventor: FERNÁNDEZ GUTIÉRREZ, Alvaro, E-08021 Barcelona (ES)
(74) Representative: ZBM Patents
(86) International application number: PCT/EP2008/009616
(87) International publication number: WO 2009/065526

(56) References cited:
- EP-A- 1 641 263
- US-A- 5 855 008
- US-A1- 2002 133 518
- US-A1- 2004 003 398
- US-A1- 2004 059 708
- US-A1- 2005 288 999

## Description

### Field of the Invention

The invention relates to a process for the on-line distribution of audiovisual contents with advertisements.

The invention also relates to an advertisement management system and to a digital rights management system suitable for operating in equipment provided with an audiovisual content player, and to an audiovisual content player incorporating any of these systems.

The invention is primarily though not exclusively applied to audiovisual contents with intellectual property rights. In the sense of the present invention, audiovisual content with intellectual property rights is understood as a set of data in one or several digital files which can be played in an audiovisual player and the use of which is protected by intellectual property rights.

### State of the Art

The trend offered today on the market for playing audiovisual content with intellectual property rights, such as movies or music for example, is aimed at developing a series of Digital Rights Management or DRM technologies such that users pay for viewing the contents of greater interest without receiving advertising in said contents. The so-called VOD (Video On Demand), virtual stores which sell the content on the Internet, and also IP payment or PPV (Pay_Per_View) televisions in which a user pays to see a certain content, are based on this principle.

Content producers and distributors using this payment per content principle have been very negatively affected with the creation of P2P (Peer_to_Peer) networks, which allow exchanging files with content free of charge without the user who sees the content paying any price at all. There are a number of P2P networks, such as eMule, Ares Galaxy or BitTorrent for example, which have become very widespread. P2P transmissions are systems using the upload bandwidth of each user receiving a file for sharing said file. Thanks to this upload bandwidth, each user receiving data of a file sends to other users these same data. A network of users exchanging data forming the file with one another, instead of each user downloading the entire file from a provider site, is thus formed.

The owners of the intellectual property rights of the files distributed in P2P networks have initiated a number of legal actions in different countries with the intention to shut down said P2P networks. To prevent the shut-down of the servers managing P2P networks by the police or other official or judicial organisms, P2P networks have evolved in two ways: on a technological way and on a legal way.

From a technological point of view, "pure" P2P networks have emerged in which there are no servers that can be shut down by means of a judicial or police action. These new networks use new technologies, such as DHT or Distributed Hash Tables for example, which allow networks to operate without a server, whereby there is not a single central port where the police can stop the operation of the network. In order to stop a pure P2P network it is necessary to paralyze all its nodes or most of them, which greatly hinders the effectiveness of legal actions aimed at shutting down these networks.

From the legal point of view, new P2P networks have emerged such as Bit Torrent, the servers of which contain no file with intellectual property rights, rather they only contain "bit torrent" files with information on the points of the P2P network from which parts of a file with intellectual property rights can be downloaded, and it is debatable that the supply of a simple bit torrent file is illegal.

The discussion regarding the legality of P2P networks must further take into account legal uses of said networks, such as downloading files the owners of which have agreed to the download: demo software versions, open code software, content under the Creative Commons license and the like. For these reasons the current legal status of P2P networks is not altogether clear and furthermore changes depending on the country.

In opposition to this pay per content system which, as previously mentioned, has been very negatively affected by the emergence of P2P technologies, is the conventional television which broadcasts unrestrictedly and in which the users do not have to pay to see the content. Conventional television applies an advertising system in which the television channel offers advertisers a space that is reserved on its broadcasts to insert advertisements, and the cost of each advertisement depends on the duration thereof and on the expected audience for the time it will be broadcast. In addition, predictions relating to the type of audience, i.e. to the profile of the expected spectator, allow adjusting the type of advertisement for each channel and time slot. This same advertising system is currently used in digital cable television, with the difference that by having a large number of thematic channels, it is possible to more accurately predict the profile of the typical spectator of each channel.

The broad diffusion of the Internet network and the emergence of P2P networks have not significantly affected this conventional television advertising system, which continues to operate without suffering the income losses that are affecting the sale of music and movies in CD and DVD formats. It therefore seems that there is a rather widespread and accepted social behavior consisting of watching commercial television channels that insert advertising in their contents to finance the broadcasts and that this model is more widely accepted by users than the pay per content system.

Applying the principles of the conventional television advertising system to the field of Internet downloads, i.e. a user access audiovisual content in exchange for watching advertising, is of great interest. As previously mentioned, this system is more widely accepted socially than the pay per view system and allows suitably compensating the intellectual property rights owners.

However, in order for such a system applied to Internet downloads to work satisfactorily, technical solutions are necessary which allow on one hand reaching a large diffusion of the audiovisual contents offered by Internet and, on the other, allowing swift participation of the different participants: download sites, advertisers, users and intellectual property rights owners. Both conditions are necessary for such a system applied to Internet downloads to be sufficiently efficient and to be implemented in practice.

Companies advertising their products or services on the Internet attempt for their webpage to be found as easily as possible by a user navigating on network and interested in said products. A known method for attaining this objective consists of advertising the products on content webpages attracting users interested in a specific topic. These content webpages can be, for example, thematic pages on videogames, film, music, computer programs, etc. The advertisements are arranged in the form of advertising inserts including a link, such that when a user clicks on one of said links, he/she is redirected to said webpage of the selling company that has placed the advertisement and such company pays the content webpages a fee in accordance with the number of clicks made on the links.

Patent US5948061 describes an application of this method in which the advertisers deliver to a server its advertisements in the form of advertising inserts so that it chooses which webpages are the most suitable for hosting each advertising insert. The webpages ascribed to this system contain a reference making the browser of a user who visits said webpage contacts with the server, and then the latter sends to the browser an advertising insert, for example in the form of an advertising band or banner, for the browser to display it on the user's computer screen. To select the advertising insert sent to the browser, the server bases itself on the information that the user's browser delivers to it, including an identification of the webpage that the user has visited and information about the user (such as the Internet address from which the browser acts and other data that the user has agreed to communicate). If the user clicks on the advertising insert, the browser again contacts the server and the server redirects it to a webpage of the advertiser.

A more evolved application of this method, which is more effective in relation to the way of organizing the relationship between the selling companies of products or services and the content webpages, and also in relation to the way of technically implementing the inclusion of advertising inserts in webpages and the fee for the clicks made, is the AdSense system of the Google search engine described in patent applications US2004/0093327 and US2004/0059708. This system allows any Web to include advertising of several advertisers and to receive a fee for it. The AdSense system analyzes the content of the webpages which are to host advertising inserts and decides which webpages are the most suitable for each advertising insert. The advertising inserts contain a link to the advertiser's webpage. Every time a user clicks on one of these advertising inserts, the owner of the webpage hosting the advertising insert obtains a fee from the advertiser. The AdSense system has the significant advantage of allowing companies to advertise on webpages the content of which is related to its products and which will therefore be the webpages visited the most by users who are potentially interested in said products. However, it has the drawback that it does not effectively allow preventing fraudulent clicks occurring when the owners click on their own webpage advertising inserts for the sole purpose of increasing the fee that will be paid by the advertiser. Another type of fraudulent clicks consists of a company dedicated to repeatedly clicking an another company's advertising insert with the sole purpose of quickly reaching the maximum budget established for said advertising insert and to thus cause the automatic deactivation thereof. The problem with the fraudulent clicks very negatively affects both advertisers, who pay for useless clicks, and the owners of the webpages hosting the advertising inserts. In fact, many advertisers reject this system or are willing to pay very little for the advertising inserts. To solve this problem within the AdSense system, it would be necessary to detect the situations in which a click is repeated several times from a single IP address and to provide a process for deciding whether or not they are fraudulent clicks. For reasons that are obvious to a person skilled in the art, such a solution complicates the operation of the system.

Another drawback of the AdSense system is that it does not respond to the specific problems of downloading digital files with intellectual property rights.

Patent US6363356 describes a system offering a solution that can be applied to the online distribution of software with the option of testing it before buying it. This system allows the advertiser to only pay for the clicks that have effectively resulted in a software sale. To that end, when a user clicks on an advertising insert and is redirected to the webpage of the software company, the URL (Uniform Resource Location) address of the webpage that hosted advertising insert is included in the redirectioning. This information is received and stored by the software company's webpage server and is added to the digital file when the user downloads it. Therefore, when the user contacts the software company's webpage again to buy a use license for said software, it is possible to know on which webpage the advertising insert that generated the purchase of the license was located.

This system disclosed in patent US6363356 has not been extended because it has several drawbacks. A first drawback consists of the fact that it is not designed to be applied globally: each advertising company must implement its own method to relate itself with content webpages and to include advertising inserts in them. A second drawback of this system is that in order to add the reference Web URL address to the downloaded file, said file is encapsulated in a wrapper and said information is added to said wrapper. The user does not directly download the digital file that he had selected, but rather the wrapper containing it. This requires performing a recompilation process before downloading and therefore a wait time is introduced that is too long for the standard download time scale on the Internet. This is the main reason that this system was never developed in practice. A third drawback of this system is that it does not provide for the case in which the download is direct, i.e. directly from a content webpage offering downloads, such as the webpage www.tucows.com for example.

As has been seen, the known technical solutions are not entirely satisfactory. For this reason, current audiovisual contents distribution systems only offer the option of paying to see the content, with the aforementioned consequence that many users choose to download the contents from the P2P networks, whereby the intellectual property rights owners receive no fee.

Patent US7152091 discloses an advertising method applied to downloading contents on Internet consisting of showing advertising in a user's browser while the user downloads a content. The download is cut off if the user interrupts the playing of advertising in the user's browser. This method has the drawback that it is rather ineffective in practice because users are not used to being in front of a computer during the time a download takes. With the currently available technology for most users, downloading a 400 Mbyte video takes approximately four hours, whereby it is common for a user to launch a download and to leave to do other things. In addition, the method described in US7152091 does not allow controlling that the user actually sees the advertisements. Even in the event that the user remains in front of the computer, he/she can reduce the browser window in which the advertisements are shown and continue doing other things in the computer.

### Summary of the Invention

The main purpose of the invention is to provide an improved system for the on-line distribution of audiovisual contents with advertising having the advantages of the previously described known systems but preventing their drawbacks.

An object of the invention is to provide a system which allows carrying out a mass diffusion of audiovisual contents such that, as the case may be, a fee can appropriately be paid to the owners of the rights of said audiovisual contents.

Another object of the invention is to provide a system in which the advertisers only pay for the advertisements which have been shown when the audiovisual contents associated to the advertisements have been played.

Another object of the invention is to provide a system which can generally be applied and automated without the companies that wish to advertise or the companies owning the rights of the audiovisual contents having to be preoccupied with contacting and negotiating with one another.

Another object of the invention is to provide a system which technically allows several parties to participate in the process from the first click made by a user who downloads a file with audiovisual content, until advertisements associated to said audiovisual content are shown and makes it possible to suitably and separately pay a fee to each of them.

Another object of the invention is to provide a system which does not negatively affect the speed of downloading the digital files and which does not complicate the process of playing the audiovisual contents of said digital files by a user.

Another object of the invention is to provide a system which is compatible with different P2P (peer-to-peer) type download technologies, such as the BitTorrent files transfer protocol for example.

For this purpose a process for the on-line distribution of audiovisual contents with advertisements has been developed, characterized in that:
- an intermediary site receives digital files with audiovisual content on-line and makes a selection of referring sites suitable for offering said digital files on-line;
- advertiser sites provide said intermediary site with advertisements to be shown,
- said intermediary site makes a selection of said advertisements and assigns to each digital file associated advertisements;
- a user accesses one of said selected referring sites on-line, which offers said digital files on-line, and downloads one of said digital files on-line;
- said downloaded digital file is used in equipment in which a user wishes to play the audiovisual content of said downloaded digital file;
- said equipment receives the associated advertisements which have been assigned by said intermediary site to said downloaded digital file, and said associated advertisements are shown in said equipment;
- it is checked that said associated advertisements have been shown in said equipment and after having performed said check:
   [i] an audiovisual content player provided in said equipment plays the audiovisual content of said downloaded digital file, and
   [ii] download identifying data, comprising at least identifying data of said referring site, and play information data, comprising at least information which allows identifying said associated advertisements, are transmitted on-line to said intermediary site;
- based on said identifying data of the referring site, said intermediary site performs an action to remunerate said referring site and, based on said play information data, said intermediary site performs an action to receive a remuneration from the advertiser sites that had provided said associated advertisements.

The invention provides a first advertisement management form in which said download identifying data is incorporated to said digital file before it is downloaded, i.e. before the download thereof is initiated or while it is being downloaded.

Said download identifying data is preferably incorporated to said digital file as files properties metadata of said digital file.

Said associated advertisements are preferably incorporated to said digital file before it is downloaded, whereby said equipment receives said associated advertisements as part of said downloaded digital file.

In a preferred embodiment, an advertising management system cooperating with said player is executed in said equipment so that said associated advertisements, which are associated to said downloaded digital file, are shown by said player and to prevent playing the audiovisual content of said downloaded digital file in said player if said associated advertisements have not been shown in said player.

Once said associated advertisements have been shown in said player, said advertising management system preferably transmits on-line to said intermediary site said download identifying data, which are incorporated in said downloaded digital file, and said play information data.

Said advertising management system also preferably transmits on-line to said intermediary site unique identifying data of said equipment or of the user of said equipment.

Said advertising management system preferably communicates on-line with said intermediary site, transmits information to it which allows identifying the downloaded digital file and receives from said intermediary site new associated advertisements which were not incorporated in said downloaded digital file, and said advertising management system cooperates with said player so that it shows said new associated advertisements.

Said advertising management system preferably communicates on-line with said intermediary site, transmits information to it which allows identifying the downloaded digital file and receives from said intermediary site indications to cancel associated advertisements which were incorporated in said downloaded digital file, and said advertising management system cooperates with said player so that the advertisements which have been cancelled by said intermediary site are not shown.

Said advertising management system preferably cooperates with said player so that, when it has finished showing one of said associated advertisements said player waits to receive an indication from the user to begin to show the following associated advertisement.

Furthermore, said advertising management system preferably cooperates with said player so that the latter does not show the audiovisual content of said downloaded file if the time elapsed between the moment in which said player has finished showing one of the associated advertisements and the moment in which the user indicates to said player to begin to show the following associated advertisement exceeds a certain threshold.

The invention provides an advantageous solution to more effectively carry out the distribution of digital files in which the intermediary site provides on-line to said referring sites links to be installed in said referring sites, such that when a user activates one of said links in one of said referring sites, said user is redirected to a download site to download, from said download site, said digital file; and said download identifying data, which are transmitted on-line to said intermediary site after having shown in said equipment said associated advertisements, comprise identifying data of said download site.

A download management application is preferably executed in said download site and receives said identifying data of said referring site and, when said user is redirected to said download site to download said digital file, said download management application incorporates to said digital file said identifying data of the referring site.

Said download management application which is executed in said download site preferably incorporates to said digital file as said download data, in addition to said identifying data of the referring site, said identifying data of said download site.

The invention provides a second advertisement management form in which in order to download said digital file, a browser of said equipment accessing a download site on-line is used; said download site sends said associated advertisements to said browser so that the browser shows them in said equipment and said download site does not allow the download of said file to be performed until said advertisements have been shown in said browser.

Said download site preferably sends to said intermediary site on-line said download identifying data and said play information data.

A digital rights management system, checking that said associated advertisements have been shown by the browser of said equipment and which cooperates with said player to prevent playing the audiovisual content of said downloaded digital file if said associated advertisements have not been shown in said browser, is preferably executed in said equipment.

Said digital rights management system preferably cooperates with said player to limit the number of times that the audiovisual content of said downloaded digital file can be played, and/or the time during which said audiovisual content can be played since said associated advertisements were shown in said browser.

Once one of said associated advertisements has been shown in said browser, the following associated advertisement is preferably not shown in said browser as long as the user does not indicate, by interacting with said equipment, that said following associated advertisement should be shown.

Furthermore, said download site preferably does not authorize the download of said digital file if the time elapsed between the moment in which said browser has finished showing one of said associated advertisements and the moment in which the user interacts with said equipment to indicate that the following associated advertisement should be shown exceeds a certain threshold.

The invention provides a solution so that said intermediary site makes an automatic selection of the advertisements provided by the advertiser sites and assigns them to each digital file. According to this solution, said intermediary site receives on-line, together with said digital files, information about the audiovisual content category of each digital file, and said intermediary site is provided with an advertisement auction management module in which the different advertiser sites offer on-line a price for their advertisements for each audiovisual content category.

In a particularly advantageous embodiment of the invention which is especially applied to the on-line distribution of audiovisual contents with intellectual property rights, said intermediary site receives on-line said digital files from proprietary content sites and, after the audiovisual content of said downloaded digital file has been played in said equipment, said intermediary site receives on-line said play information data further comprising information which allows identifying said downloaded digital file, and said intermediary site performs an automatic action to remunerate the proprietary content site from which it had received said downloaded digital file.

The invention also relates to the advertisement management system and to the digital rights management system, which have the functionalities described above in reference to the processes according to the invention. The invention also relates to an audiovisual content player incorporating any of these systems, all according to the description provided below in the detailed description of several embodiments of the invention.

### Brief Description of the Drawings

Other advantages and features of the invention will be observed based on the following description in which preferred embodiments of the invention are described, with a non-limiting character, referring to the attached drawings.
Figure 1 shows a block diagram illustrating a system for applying the process according to the invention. This figure shows the group of different equipment which can be involved in said process and the relationships established between them.
Figure 2 shows a block diagram illustrating at a high level the algorithm executing a download application in a download site from which a file is downloaded after a link to said file has been activated in a referring site, all according to the system of Figure 1.
Figures 3 and 4 show block diagrams illustrating, at a high level, the algorithm executing an advertising management system in a user's equipment to play an audiovisual content together with advertisements. Figure 3 illustrates a first step in which said management system connects to an intermediary site to update the information of the advertisements which must be played. The process of playing the advertisements together with the audiovisual content is illustrated in Figure 4.
Figures 5 and 6 respectively illustrate the structure of a file with audiovisual content which is downloaded by a user and the structure of an advertisement file which is transmitted by an intermediary site to update the advertisements which must be played together with said audiovisual content, all according to the system of Figure 1.
Figure 7 shows a block diagram, similar to one of Figure 1, illustrating an alternative system for applying the process according to the invention in which in order to view the advertisements, the browser of the computer in which the file with audiovisual content is downloaded is used.

### Detailed Description of Embodiments of the Invention

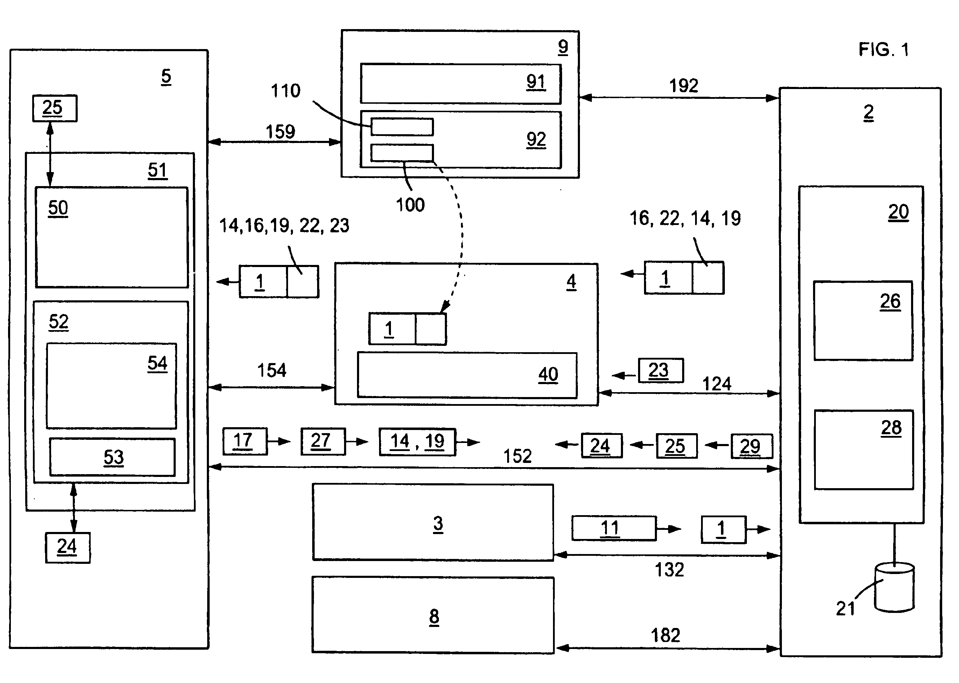

The block diagram of Figure 1 schematically shows a system of applying the process according to the invention. In this example, the data network is the Internet. The system is formed by a user's equipment 5, an intermediary site 2, a plurality of referring sites 9 associated to the intermediary site 2, a plurality of proprietary content sites 3, advertiser sites 8 and one or several download sites 4, all these sites 2, 3, 4, 8 and 9 being Internet websites. For greater clarity in the explanation, a single referring site 9, a single proprietary content site 3, a single advertiser site 8 and a single download site 4 have been shown. However, the system and the process according to the invention are especially advantageous when a large number of referring sites 9 are involved because the greater the number of said referring sites 9 the greater the number will be of Internet users attracted by such sites and therefore the greater will be the number of file downloads.

In the different processes involved in the process according to the invention, the different sites 2, 3, 4, 8, 9 and the user's equipment 5 can establish among one another the on-line communications shown in Figure 1: 152, 154, 159, 192, 132, 182 and 124.

The communications between the different sites of Figure 1 can be carried out using different communication protocols or technologies such as FTP (File Transfer Protocol), HTTP (Hypertext Transfer Protocol), Web services, SOAP (Simple Object Access Protocol) objects, TCP/IP (Transmission Control Protocol/Internet Protocol) connections or any other method of communication between networks. These methods are known by a person skilled in the art and it is therefore not considered necessary to delve further into their description.

The example shown in Figure 1 illustrates the case in which a digital file 1 containing music, video, images or text in digital format, which is protected by copyright and which can be played in a user's equipment 5, is downloaded. In this example, the equipment 5 is a computer with a connection to Internet. However, the invention can also be applied to other equipment that can be connected to a data network, such as mobile telephones or digital players with the capacity to connect to a data network for example. Returning to the example, the computer 5 has an operating system 51 in which a content player 52 capable of playing audiovisual content of a file 1 in a screen or window 54 is installed and which is equipped with an advertising management system 53.

The advertising management system 53 is a control system, according to the invention, which is capable of detecting that the audiovisual contents of the files 1 are protected by intellectual property rights and which sees to it that, along with playing the audiovisual content of each downloaded file 1, the advertisements associated thereto are shown. Specific functionalities of said advertising management system 53 according to the invention will be explained below.

The different steps of the process according to the invention illustrated in Figure 1, as well as the different logic elements and materials which allow applying said process, are described below.

A proprietary content site 3 is a site of a company, or of a person, who owns the rights of audiovisual contents of files 1 and who is interested in obtaining advertising earnings derived from playing the audiovisual contents of said files 1. The proprietary content site 3 is registered on-line 132 in the intermediary site 2. During this registration process 132, the proprietary content site 3 introduces its identifying data such as name, address, e-mail, etc., for example, and sends the files 1 to the intermediary site 2 so that said intermediary site 2 can distribute it. The intermediary site 2 has an intermediation application 20, for example with a Web interface, which allows performing the registration process and storing the registration information of the proprietary content site 3 in a database 21.

During the registration process, the proprietary content site 3 also provides to the intermediary site 2 commercial information 11 related to the file 1. Said commercial information includes information on the type of content which will allow the intermediary site 2 to select the most suitable advertising categories for each type of content, such as the name of the file, the name of the parties, the type of movie for example, etc. It also includes a series of key words associated to each file 1 indicating which is the content of said file and which will be used by the intermediary site 2 to select suitable referring sites 9 for each file 1, as will be seen below. The intermediary site 2 also stores this information 11 in the database 21, and can modify it so that it adapts to its own criteria, such as for example not advertising content for adults on Webs which are not classified as adult webs, or any other type of modification which the intermediary site 2 considers suitable to perform in the description of the files.

The intermediary site 2 preferably incorporates in each file 1 an identifier 16 which allows the intermediary site 2 to uniquely identify each file. Based on said identifier 1, the intermediary site 2 accesses its database 21 and consults all the information associated to each file. For example, the identifier 16 can be a GUID (Globally Unique Identifier), which is a reference number randomly generated by the application and which in practice is unique because the probabilities that the same number is assigned twice are very small. GUID-based techniques are known by a person skilled in the art and it is therefore not considered necessary to explain them in greater detail.

The intermediary site 2 optionally incorporates directly in the files 1 advertisements 22 which must be shown when the audiovisual content of said files 1 is played. As will be seen below, it also provides that the download site 4 inserts advertisements 23 in the files 1, and that the intermediary site 2 directly sends advertisements 24 to the computer 5 in which the audiovisual content of the files 1 is played.

The intermediary site 2 reaches agreements with a series of referring sites 9 and download sites 4 which are interested in participating in the on-line distribution of files 1 in exchange for receiving a commission or percentage of the advertising earnings which are generated. As previously stated, Figure 1 shows a single referring site 9 and a single download site 4 to facilitate the description. The function of the referring site 9 is to attract a certain group of users who are navigating on the Internet and who are interested in the content 91 offered by said referring site 9. The users who visit a webpage of the referring site 9 can see in said webpage advertising inserts 110 and download the files 1 by clicking on the respective links 100.

The intermediary site 2 makes a selection of the referring sites 9 which can advertise the different files 1. To that end, candidate sites to being referring sites 9 are communicated on-line 192 with the intermediary site 2 and perform an on-line registration process consisting of identifying (name, address, telephone, e-mail,...) and communicating the URL address which allows locating it on the Internet. During the registration process of the referring site 9, the intermediary site 2 can optionally request that a series of words or descriptions which are used to describe the content 91 of said referring site 9 are introduced.

When the referring site 9 finishes the registration process in the intermediary site 2, said intermediary site 2 supplies it with the code of an advertising insert and link management application 92 which the referring site 9 adds to its own webpage, for example by copying (Control+C in Microsoft® Windows) from the webpage of the intermediary site 2 the text of the code and pasting it (Control+V in Microsoft® Windows) in the HTML content of a webpage of the referring site 9. Said advertising insert and link management application 92 can be, for example, a code in Javascript, PHP or ASP.NET language, which communicates with the intermediary site 2 by means of Web services (collection of protocols and standards used to exchange data between websites through the Internet). Said advertising insert and link management application 92 also allows the intermediary site 2 to modify the advertising inserts 110 and the links 100 for the purpose of updating them. As will be seen below, this allows optimizing the efficacy of the referring sites 9 in terms of the number of file downloads and number of sales. The programming of said advertising insert and link management application 92 is within the scope of a person skilled in the art, as it forms part of the basic knowledge of any programmer who knows the operation of the Web services. It is therefore not considered necessary to explain them in further detail.

When said advertising insert and link management application 92 is executed in a webpage of the referring site 9, it shows said advertising inserts 110 together with the links 100. When a visitor of the webpage of the referring site 9 activates one of said links 100, the file 1 is downloaded in the visitor's computer 5.

Once the referring site 9 has been registered, the intermediary site 2 analyzes said referring site 9 to check that the advertising insert and link management application 92 works properly and also to analyze the content 91 of said referring site 9. The intermediary site 2 counts the number of times that each word appears in the content 91 of the referring site 9, selects those words which in the referring site 9 are greater in number than certain percentage and stores this content information of the referring site 9 in its database 21. The intermediary site 2 then chooses the most suitable files 1 depending on the content 91 of the referring site 9. For example, a referring site related to black and white films will be especially suitable for downloading black and white movies, whereas a referring site related to rock music will be suitable for of rock music downloads. In order to choose which are the most suitable files 1 for each referring site 9, the intermediary site 2 compares the content information of the referring site 9 it has stored in its database 21 with the commercial information 11 of the files 1 provided by the proprietary content site 3, and chooses, for each referring site 9, the files 1 having a higher degree of coincidence with said content information of the referring site 9.

In order to optimize the number of file downloads 1 and its possible advertising earnings, the intermediary site 2 can vary the links 100 of each referring site 9 and perform a statistical follow-up of which generate more downloads and more advertising earnings. The intermediary site 2 controls file downloads 1 in each referring site 9 and the advertising earnings generated by each file. This statistical information is stored in the database 21 of the intermediary site 2. The intermediary site 2 can thus establish which of the files 1 have the highest probability of being downloaded and played by relating the historical advertising earnings with the selected key words of each referring site 9. For example, by multiplying the advertising income created when the advertisements associated to the audiovisual content of the files 1 are shown by the commission percentage that the referring site 9 will earn, and taking into account the percentage of users who download a file and subsequently play the audiovisual content of said file 1 and see the associated advertisements, the intermediary site 2 obtains a statistical estimation of the earning that each click on a link 100 or each viewing of an advertisement of a file 1 involves for the referring site 9. The intermediary site 2 can thus update the advertising inserts 110 and the associated links 100 of a referring site 9 so that they advertise and indicate the files 1 which will generate greater earnings. Another method that the intermediary site 2 can use to select the most suitable files 1 for each referring site 9 consists of choosing files similar to the most successful files on another referring site 9 having a similar content 91. Evidently, a manual selection of the most suitable files 1, a manual selection being understood as a selection made by a person, is always possible, but at a high cost. This cost is preferably eliminated by using a computer program which automatically executes the described selection algorithms.

When a user uses the Internet browser 50 of the computer 5 to access a webpage of the referring site 9 containing the advertising insert and link management program 92 and activates one of said links 100, the process of downloading the file 1 associated to said link 100 is initiated from a download site 4. To that end, each one of said links 100 contains a URL address pointing to the corresponding file 1 in said download site 4. This is schematically indicated in Figure 1 by means of an arrow drawn with dotted lines indicating the file 1 from the link 100.

The files 1 have previously been delivered to said download sites 4 by the intermediary site 2. In order to receive on-line 124 said files 1 provided by the intermediary site 2, the download sites 4 can use, for example, the FTP protocol. To that end, each download site 4 receives from the intermediary site 2 a user name and a password or access code authorizing him to receive files 1 from said intermediary site 2.

Preferably, as shown in the example of Figure 1, the download sites 4 are different from the referring sites 9. This allows a user to download the files 1 from a download site 4 without the bandwidth or transmission speed of the communication of the referring sites 9 with internet being affected by the file downloads and decreasing the access speed of the users who wish to see the content 91 of the referring sites 9. However, other set-ups of download sites 4 are possible without departing from the scope of the present invention. Therefore, for example, the download site 4 can be the actual referring site 9 if the latter has sufficient bandwidth to allow Internet users to consult its content 91 and at the same time download the files 1. Another possible set up is that the download site 4 forms part of the intermediary site 2.

In a preferred embodiment of the invention, download identifying data 14, 19 are incorporated in the files 1 before said files 1 are downloaded by a user from a computer 5, or in the moment in which said download is initiated. The incorporation of this download identifying data in the files 1 can be done in different ways. An especially advantageous way of adding said data to the files 1 consists of including them as metadata of the files 1. This operation is carried out prior to the download or in the moment of the download, and can be carried out in the intermediary site 2 or partially in said intermediary site 2 and in each download site 4, as will be seen below.

The metadata of a file are data containing formal information of the file, such as for example the name, size, type of file, modification date, owner, etc. In Microsoft® Windows, these metadata can be seen in File > Properties of the Document menu in the graphic interface of the Windows applications. The location containing this metadata in the file has several fields which are currently free. The process according to the invention advantageously uses these metadata-free fields for housing the download identifying data In them. Another solution according to the invention consists of defining new properties or metadata fields for a file, for example by using the Microsoft DSOFile.dll library, and housing said download identifying data in them.

The download identifying data incorporated in the files 1 which are downloaded comprise at least identifying data 19 of the referring site 9 in which the user has ' activated the link 100 that led to the download. This identifying data 19, which includes for example the URL address of said referring site 9, allows identifying said referring site 9 to remunerate it for its participation in the event that an advertising income is generated, if the advertisements associated to playing the audiovisual content of the downloaded file 1 are shown.

Furthermore, said download identifying data also preferably comprise identifying data 14 of the download site 4 from which the file 1 is downloaded. This data 14, including for example the URL address of said download site 4, allow identifying said download site 4 to remunerate it for its participation in the event that an advertising income is generated, if the advertisements associated to playing the audiovisual content of the downloaded file 1 are shown.

In a basic embodiment, before providing the files 1 to the download site 4, the intermediary site 2 incorporates to said files 1 all the download identifying data 14, 19 in the form of metadata of said files 1. The intermediary site 2 then delivers these files 1 to the download site 4 and also sends to the referring site 9 advertising inserts 110 in the form of text and/or images relating to the files 1 which have been sent to the download site 4, as well as the links 100 that the referring site 9 must publish on its webpage. When the advertising insert and link management program 92 of the referring site 9 receives said advertising inserts 110 and links 100, it shows them on the content webpage 91 in which it is installed. Any user accessing the referring site 9 through internet will see the advertising inserts 110. When the user activates one of these links 100 in the referring site 9 it initiates from the download site 4 the download of the corresponding file 1, which will incorporate said download identifying data 14, 19 in the form of metadata. This embodiment requires that the intermediary site 2 delivers to the download site 4 each one of the files 1 with all download identifying data incorporated, i.e. with the identifying data 14, 19. If, for example, there are 10,000 referring sites advertising a file 1 having a size of 50 Megabytes, the intermediary site must incorporate said download identifying data in 10,000 files and send each one of these files to the download site 4, which must store them all, thus taking up a space of 500 gigabytes.

In a preferred embodiment, the identifying data 19 of the referring site are incorporated in the files 1 in the moment of the download. To that end, when a user activates one of the links 100 in the referring site 9, said link 100 includes a URL address to redirect to the download site 4 and it also includes the actual URL address of the referring site 9 so that it can be transmitted to said download site 4. This can be done, for example, by passing the information of the URL address of the referring site 9 as a parameter in the URL address it takes from the webpage of the referring site 9 to the webpage of the download site 4. In the download site 4 a download management application 40 receiving said identifying data 19 of the referring site 9 is executed and incorporates them as metadata to the file 1 to be downloaded by the user. An embodiment of this process is shown below.

A user accesses referring site 9 number 5,000 and activates link 100 to download the file 1. The link 100, which has been prepared by the intermediary site 2 and installed in the referring site 9 by the advertising insert and link management program 92, contains the following URL address:
http://www.download-site.com/referring-site-5000/f 1.mp4

The first part "www.sitio-de-descarga.com" identifies the URL address of the download site 4, the second part "referring site-5000" is a parameter identifying the URL address of referring site number 5,000, and the last part f1.mp4 identifies the file 1 to be downloaded.

When the download site 4 receives the download request to download the file 1, the download management program 40 which is executed in the download site 4 examines this URL address, detects that it comes from referring site 9 number 5,000 and adds the following information to the metadata of the file 1 as identifying data 19 of said referring site 9:
URL9 = http://www.referring-site-5000.com
wherein URL9 is a label which has been defined in the metadata of the file 1 by the intermediary site 2 to host the URL address of the referring site 9. The download management application 40 copies the URL address of the referring site 9 http://www.referring-site-5000.com in said URL9 label.

As a result of this preferred embodiment, the intermediary site 2 must only deliver to the download site 4 a single copy of each file 1 without needing to send a plurality of files 1 or to include in the download identifying data the identifying data 19 of the referring site 9. Returning to the numerical example explained above, it can be seen that by applying this preferred embodiment the intermediary site 2 sends to the download site 4 a single file with a size of 50 megabytes (instead of 10,000 files with a size total of 500 gigabytes).

When the download site 4 receives a visit that was redirected from a link 100 of a referring site 9, the download management application 40 of said referring site 4 has different copies of the corresponding file 1 that was delivered by the intermediary site 2, and copies the identifying data 19 of said referring site 9 in the URL9 label of the metadata of one of said copies of the file 1. Once said data 19 has been introduced in the metadata of said copy of the file 1 the latter is downloaded in the user's computer 5.

The reason that the download management application 40 has several copies of the files 1 that are downloaded prepared is that while one of the files is being downloaded, a process which can last several seconds or several minutes, the properties of said file cannot be modified so as to respond to a second download request which arrives before the file is fully sent to the first user who is downloading it. If the download management application 40 modifies the metadata of a file which is being downloaded to include the referring site for a second download before the first download ends, it is very likely that the first download will fail and a file with mistaken data will be downloaded.

If the size of the file 1 is small, the download management application 40 can make a copy in the very moment of the download request, modify the metadata of the copy and send the file with the updated metadata. If the size of the file is large, the download management application 40 would take several seconds or minutes to make a copy of the file to modify the metadata. This could involve a drawback similar to the one described at the beginning for the system of patent US6363356, which consists of recompiling the program to generate a wrapper (although in this case the drawback would be less because making a copy of a file is a much faster process than recompiling a program in a new file).

In any modem operating system, such as Microsoft Windows Server 2003 for example, moving a file from one directory to another in the same disc is a virtually instantaneous process which simply requires slightly modifying the directory structure. This process of moving a file is even much faster than creating a copy of the file in the moment of the download.

It is therefore suitable for the download management application 40 to have several copies of the files 1 prepared beforehand, and it can adapt the number of copies of each particular file 1 according to the download statistics of said file. Making copies can be optimized by optionally using RAM memory based discs, in addition to having the mentioned already prepared copies ready to be sent.

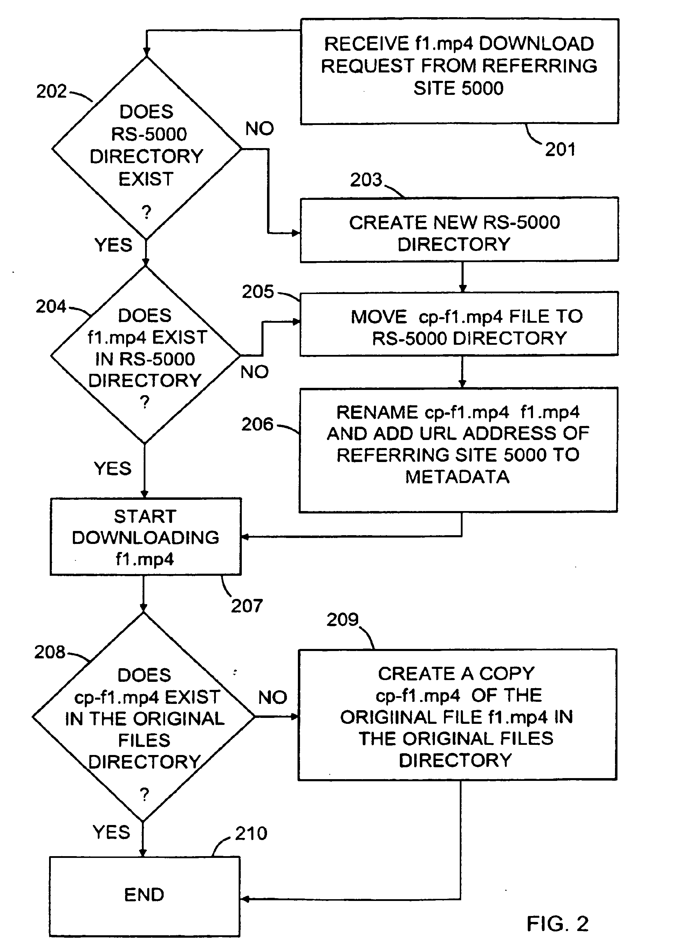

The process executing the download management application 40 is illustrated in further detail in Figure 2. According to the previously explained example, a user has accessed the referring site 9 number 5,000 and has actuated the link 100 to download the file 1. As a result, the download management application 40 in the download sites 4 receives 201 a download request to download the file 1, as previously explained, and checks 202 if there is in a hard drive of the download sites 4 a directory attributed to referring site 9 number 5,000. If there is not, it creates 203 said directory, which for example is called RS-5000 and which is associated to the URL address hftp://www.download-site.com/referring-site-5000. If there is, it checks 204 if said directory contains the file 1, which in this example is called f1.mp4. If the directory does not contain said file, or if said directory has just been created 203, it moves 205 to the directory RS-5000 one of the copies of the original file 1 which is stored in an original file directory containing the files delivered by the intermediary site 2. Said copy of the original file 1 is called, for example, cp-f1.mp4. Then 206 it renames the file cp-f1.mp4, attributing it the same name as the original file f1.mp4 and copies in the URL9 label of the metadata of said file f1.mp4 the URL address of the referring site 9. As previously explained, the URL address of the referring site 9 was previously received by the download management application 40 as a parameter of the URL address contained in the link which was activated in the referring site 9. Once this information has been copied in the URL9 label of the metadata of file f1.mp4, downloading said file in the computer of the user begins 207. The download management application 40 then checks 208 if there are reserve copies of the original file 1, i.e. it checks if in the original file directory there is any file called cp-f1.mp4. If there is not, it creates 209 one or several copies cp-f1.mp4of the original file f1.mp4 in said original file directory. If said copy of the file already existed, or after having created it, the algorithm ends 210.

Returning to Figure 1, once the user has downloaded the files 1, said files can be used in a user's computer 5, specifically in an application which is an audiovisual player 52.

The intermediary site 2 has a user registration system 26 comprising a Web interface so that users can register and give their personal data and other data suitable for selecting the advertising, such as for example their sex (male, female) their age or their hobbies. During this registration process, the user chooses an access code, such as for example his e-mail address and a password. The user can thus access his data stored in the intermediary site 2 and modify it. The intermediary site 2 can benefit registered users, for example allowing them to play the higher quality or novel contents only for registered users or by sending them less advertising than to non-registered users. When a user registers from the Internet browser 50 of a computer 5 connected 152 to the intermediary site 2, the intermediary site sends to the user's computer 5 a cookie-type file or the like 25 which allows automatically identifying the user without the user having to introduce his access code and password every time the computer 5 communicates with the intermediary site 2. As a person skilled in the art knows, a cookie is a fragment of information which is stored in the hard drive of the visitor of a webpage through his browser, upon request of the webpage server, and which can be retrieved by said server in subsequent visits to said page.

Furthermore, the intermediary site 2 makes a selection of the most suitable advertisements for each audiovisual content. To that end, the intermediary site 2 has an on-line advertisement auction management module 28, in which the different advertiser sites 8 can offer different prices for their advertisements for certain audiovisual content categories, for example black and white movies, or for a specific audiovisual content, for example the movie "Casablanca".

The advertisements which have been selected by the intermediary site 2 can be inserted in the files 1 by the actual intermediary site 2 before sending said files to the download site 4, and they can also be inserted by the download site 4. In Figure 1, the advertisements which are inserted by the intermediary site 2 have reference 22, whereas those which are inserted by the download site 4 have reference 23. In the event that the advertisements 23 are inserted by the download site 4, the intermediary site 2 transmits to the download site 4 a file containing said advertisements 23. This transmission of advertisements 23 from the intermediary site 2 to the download site 4 can be done every so often, for example every hour, every day, every week, etc. This allows the intermediary site 2 to periodically update the advertising which must be advertised for each file 1. The intermediary site 2 can alternatively send to the download site 4 new complete files 1 containing the new advertisements, even though this solution involves greater bandwidth consumption.

The invention provides that the users' computes 5 are equipped with an audiovisual player 52 and an advertising management system 53, according to the invention, which cooperates with said player 52. The system 53 according to the invention takes care of the fact that the advertisements which are associated to playing the audiovisual content contained in the files 1 are shown. Said system 53 allows the user to see the audiovisual content of the files 1 by means of the audiovisual player 52 only if the advertisements which were provided have been shown. As will be seen below, the advertisements can be shown in the form of videos taking up all or part of the screen 54 of the audiovisual player 52, or in the form of text or images which are superimposed on the audiovisual content, or even in the form of audio or in other forms.

Figure 1 shows a preferred solution in which the system 53 forms part of the audiovisual player 52. However, other solutions are possible: the system 53 can be, for example, an application which is executed in the operative system 51 of the computer 5 and which does not form part of the audiovisual player 52; it can also be an integral part of the actual operative system 51 or it can even be an external apparatus connected to the computer 5.

Another function of the system 53, in addition to allowing the audiovisual content of the files 1 to be played only if the associated advertisements which were provided have been shown, is to communicate to the intermediary site 2 the necessary information so that said intermediary site can bill the advertiser sites 8 for the advertisements which were actually shown in the users' players 52. Based on this billing, the intermediary site 2 can correspondingly remunerate the proprietary content sites 3 for playing the audiovisual content taking place in each audiovisual player 52.

To that end, the system 53 communicates on-line 152 with the intermediary site 2 and sends it play information data 27 which allow identifying which advertisements associated to said audiovisual content have been shown together with the playing of such content. The play information data 27 can simply contain the identifier 16 which had been added to the file 1 by the intermediary site 2 before the download. In this case, when the intermediary site 2 receives from the system 53 the identifier 16 of the file 1 it knows, because it has stored this information in its database 21, which of the advertisements were comprised in the file 1 and associated to the audiovisual content of said file and, therefore, which ones have been shown in the audiovisual player 52. The play information data 27 preferably contains data individually identifying each advertisement and which have been introduced in the file 1 in the form of metadata by the intermediary site 2 or by the download site 4, together with said advertisements 22, 23. Therefore, the system 53 individually informs the intermediary site 2 of each advertisement 22, 23 that has been shown.

Furthermore, the system 53 also communicates to the intermediary site 2 the download identifying data 14, 19 which had been included in the file 1 in the form of metadata, before downloading said file 1, by the intermediary site 2 or by the download site 4. The system 53 obtains this downloaded identifying data 14, 19 by simply reading them in the file 1. As previously explained, in a basic embodiment of the invention, only the data 19 (identifying data of the referring site 9) and not data 14 (identifying data of the download site 4) are included in the file 1 as download identifying data; in this case the system 53 only communicates data 19 to the intermediary site 2. However, in the example shown in Figure 1 the download identifying data which are inserted in the file 1 and then communicated to the intermediary site 2 by the system 53 are data 14 and data 19.

This download identifying data 14, 19 allows the intermediary site 2 to remunerate the referring sites 9 and the download sites 4 for the participation of the latter in downloading the file 1 which has led to the audiovisual content of said file being played and to the advertisements associated thereto being shown. The advantage of this system is that the referring sites 9 and the download sites 4 will only remunerate the downloads which have actually led to the audiovisual content of the files 1 being played and to the advertisements associated thereto being shown. It can be provided that the intermediary site 2 remunerates the download sites 4 and the referring sites 9 only the first time the audiovisual content of the files 1 downloaded in a player 52 is played, or that it remunerates them on the number of times said audiovisual content is played in each player 52.

Preferably, in the moment in which the user requests playing the audiovisual content of a file 1 in the player 52, the system 53 communicates 152 with the intermediary site 2 to update the advertisements associated to said audiovisual content which must be shown together with the playing of such content. To that end, the system 53 communicates 152 with the intermediary site 2 and transmits it updating data 17 including at least information which allows identifying the audiovisual content of said file 1. This information can be, for example, the mentioned identifier 16 of the file 1. The intermediary site 2 thus identifies the audiovisual content which is going to be played in the player 52 and decides if the advertisements 22 or 23 which were incorporated in said file 1 are suitable and if it is necessary to download other advertisements. This decision is made by the application 20 of the intermediary site 2 taking different factors into account. The factors which the application 20 particularly takes into account are the following:
- If the campaigns of the advertiser sites 8 which had provided the advertisements 22 or 23 incorporated to the downloaded file 1 are still active.
- If there are new advertiser sites 8 willing to pay a higher price for advertisements associated to the audiovisual content of the file 1. As previously mentioned, the intermediary site 2 has an on-line advertisement auction management module in which the different advertiser sites 8 can offer different prices for their advertisements.

The update data 17 also preferably contains unique identifying data of the equipment 5 in which the audiovisual content is going to be played and/or of the user of said computer 5. This unique identifying data can be based, for example, on the serial number of the hard drive of the computer 5, on the MAC (Media Access Control Address) address of the network card of the computer 5, on the cookie 25 stored in the computer 5 or on any other data which allows identifying said computer 5 and/or the user of said computer 5. Thanks to this unique identifying data, the intermediary site 2 stores in its database 21 all the information of the different audiovisual contents that the user downloads and plays in the audiovisual player 52. This information stored in the database 21 allows the intermediary site 2 to create a profile for each user, both for registered users in said intermediary site 2 and for non-registered users. The intermediary site 2 can use this user information or user profile to send the most suitable advertising to each user. Therefore, as a result of the intermediary site 2 receiving the unique identifying data of the computer 5, in order to update the advertisements which will be shown when playing the audiovisual content of a file 1, the application 20 of said intermediary site 2 can take into account several factors relating to the computer 5, in addition to the previously mentioned factors. For example, the application 20 can take the following factors into account:
- The available bandwidth of the user in that moment to download new advertisements to the computer 5 from the intermediary site 2. This information can be provided by the system 53, comprised in said update data 17.
- The time elapsed from when the user downloaded the file 1. This information can also be provided by the system 53, comprised in said update data 17.

If the application 20 of the intermediary site 2 decides that it is necessary to incorporate new advertisements 24 so that they are shown when playing the audiovisual content of a file 1, it transmits these advertisements 24 on-line to the system 53. It can also transmit in the file containing said advertisements 24 metadata identifying them.

The application 20 of the intermediary site 2 can decide that some of the advertisements 22, 23 which were incorporated in the file 1 must be cancelled, i.e. they should not be shown when playing the audiovisual content of the file 1. The application 20 communicates this decision to the system 53 so that it takes this into account when playing the audiovisual content of the file 1.

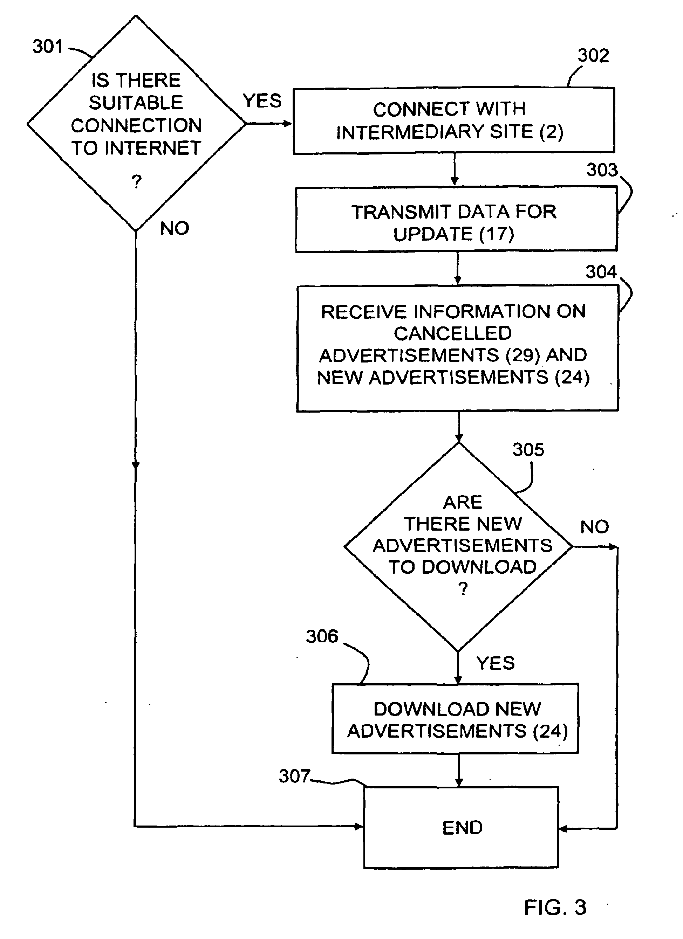

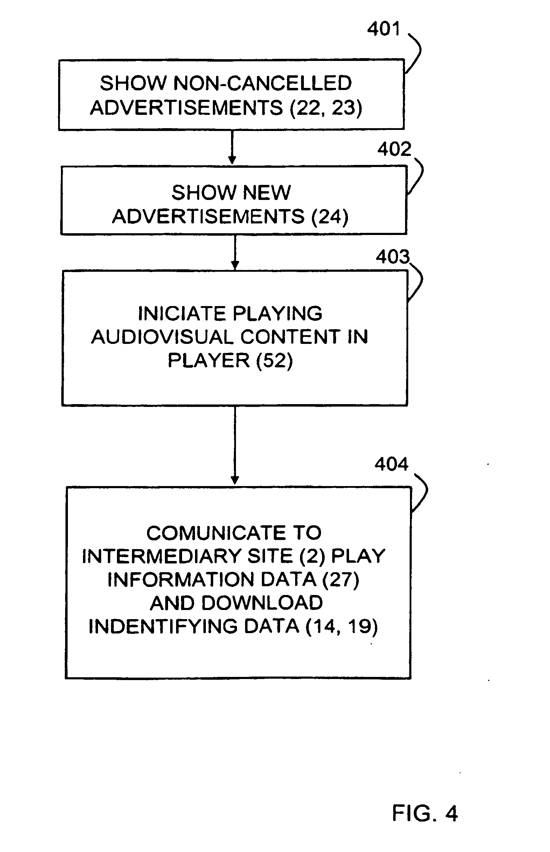

The processes executed in the system 53 for updating the advertisements and playing them in the player 52 are described below with the aid of Figures 3 and 4.

Figure 3 shows the process executed by the system 53 for the intermediary site 2 to update the advertisements which must be shown. This process is executed when a user using the player 52 of the computer 5 commands it to play the audiovisual content of a file 1. First 301 the system 53 checks if the computer 5 has a connection to Internet that is suitable for downloading new advertisements from the intermediary site 2. If it does not, for example because the user has disconnected the connection to Internet after having downloaded the files 1 or because the available bandwidth is very low and would not allow downloading new advertisements 24, the process ends 307 and the system 53 then executes the process of playing the audiovisual content shown in Figure 4, which will be described below. In this case only the advertisements 22, 23 which were included in the file 1 will be shown. If it does, i.e. if the connection to Internet is suitable, the system 53 connects 302 with the intermediary site 2 and transmits to it the update data 17. As previously explained, based on this data 17 the application 20 of the intermediary site 2 decides if any of the advertisements 22, 23 which were included in the file 1 must be cancelled and if any new advertisement 24 must be included. The system 53 receives 304 from the intermediary site 2 information 29 on cancelled advertisements and on new advertisements, indicating if any of the advertisements 22, 23 must be cancelled and if it is necessary to download new advertisements 24. If there are new advertisements to be downloaded, 305 the system 53 downloads 306 said advertisements 24 after which the process ends 307. If not, the process directly ends without having attempted to download any new advertisement.

Once this process has ended, the system 53 executes the process of Figure 4 in order to show the advertisements and to play the audiovisual content of the file 1 using the player 52. First 401 the advertisements 22, 23 which were originally included in the file 1 and which have not been cancelled are shown in the player 52. Then 402 the new advertisements 24 which have been downloaded by the system 53 are shown in the player 52. Playing 403 the audiovisual content of the file 1 in the player 52 only begins if all the advertisements 22, 23 that have not been cancelled and all the new advertisements 24 which have been downloaded are shown. It can optionally be provided that the system 53 allows starting to play the audiovisual content without having shown all the advertisements, and showing the remaining advertisements during said playing or when such playing ends. The system 53 stores information indicating which advertisements have been fully shown and communicates 404 to the intermediary site 2 the play information data 27, including an identification of the advertisements which have been shown, and the download data 14, 19 identifying the download sites 4 and the referring sites 9 which have participated in the process which led to downloading the file 1, as previously explained.

The system 53 can optionally take into account the time elapsed from when a user downloaded a file 1 for the purpose of preventing that the process according to the invention generates a rejection by the users when they download new advertisements 24. For example, if a user downloads a file 1 and wishes to immediately play its audiovisual content, the user may become angry if he has to wait for new advertisements to be downloaded to see said content. In contrast, a user who downloads a file 1 and waits, for example, three months to play its content may more readily accept that the system 53 downloads new advertisements 24. To that end, the invention provides that the system 53 authorizes playing the audiovisual content of the file, downloads the new advertisements 24 while said audiovisual content is played and shows these new advertisements 24 once they have been downloaded. Preferably, before starting to play, the system 53 informs the user of the advertisements 22, 23, 24 which must be shown so as to authorize fully playing the audiovisual content, and the user can choose to see said advertisements before or while playing said audiovisual content.

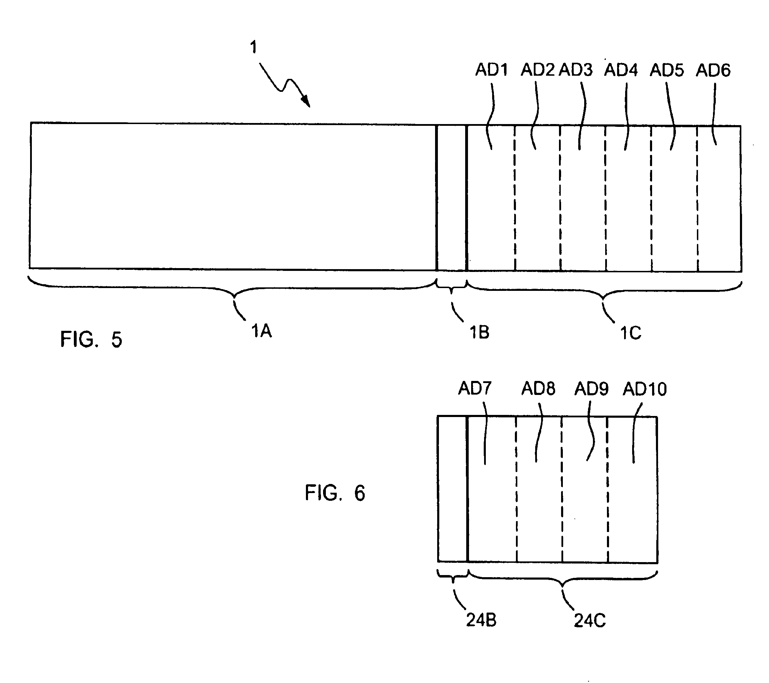

Figure 5 shows an example of a file 1 with audiovisual content, which is downloaded in a user's computer 5. The file 1 contains a first part 1A with the audiovisual content, a second part 1 B with metadata and a third part 1 C with six advertisements AD1, AD2, AD3, AD4, AD5 and AD6 which have been inserted in the file 1 before it is downloaded in the computer 5. The metadata of the second part 1 B contain the unique identifier 16 of the file 1, the identifying data of the advertisements contained in said file 1 and the download identifying data 14, 19. The six advertisements contained in part 1C of the file 1 can be the advertisements 22 (Figure 1) which have been inserted by the intermediary site 2, or the advertisements 23 (Figure 1 ) which have been inserted by the download site 4.

Figure 6 shows an example of a file containing new advertisements and which is transmitted by the intermediary site 2 to the system 53. This file contains a first part 24B with metadata and a second part 24C containing 4 new advertisements: AD7, AD8, AD9 and AD10. These advertisements are the new advertisements 24 indicated in Figure 1. The metadata of part 24B contains an indication of the advertisements contained in the file 1 which must be cancelled.

If, for example, the metadata of part 24B of the file of Figure 6 indicates that advertisements AD2 and ADS must be cancelled, the system 53 will only show advertisements AD1, AD3, AD4, AD6 (advertisements inserted in the file 1 before the download and which have not been cancelled) and advertisements AD7, AD8, AD9 and AD10 (new advertisements delivered by the intermediary site 2).

In the event that there are no new advertisements, part 24C of the file of Figure 6 is empty and part 24B, in addition to possibly containing an indication of the advertisements of the file 1 which must be cancelled, also contains an indication that there are no new advertisements.

The invention provides an optional improvement to prevent a user from being absent during the entire time in which the advertisements are shown. This improvement consists of the fact that the system 53 cooperates with the audiovisual player 52 so that when the player has finished showing an advertisement, it waits to receive an indication from the user to begin to broadcast the following advertisement. Therefore, in order to see the audiovisual content, which is only played when all the provided advertisements have been shown, the user must be present to indicate to the audiovisual player 52 to show each advertisement. In order for the user to give this indication, it can be provided for example that he pushes the play button of the audiovisual player 52. The system 53 preferably cooperates with the player 52 so that the latter does not show the audiovisual content of the file 1 if the time elapsed between the end of an advertisement and the moment in which the user clicks on the play button of the player 52 so that it shows the following advertisement exceeds a certain threshold. The user will thus pay attention to the advertisements in order to be able to act when each one of them ends.

In the embodiment described above, the system 53 forms part of the audiovisual player 52, i.e. the audiovisual player 52 is a player according to the invention which incorporates the system 53.

However, the invention also provides that the process according to the invention is compatible with the use of audiovisual players that do not incorporate the system 53, and that they can be audiovisual players according to the prior state of the art. To that end, a mechanism is necessary which allows the downloaded files to be seen in players from the prior state of the art and which guarantees that the users have seen the advertisements associated to the audiovisual content of the downloaded files.

A first solution consists of incorporating the advertisements to the audiovisual content, such that the advertisements are superimposed thereon. Therefore, when an audiovisual player from the state of the art plays the audiovisual content, it will also be playing the superimposed advertisements. For example, the advertisements can take up part of the screen in which the audiovisual content is played, or they can be text or graphic advertisements taking up the lower part of the screen. To that end, the intermediary site 2, the download site 5 and the system 53 are provided with an application which superimposes the advertisements on the audiovisual content. The way of performing such superimposition is within the scope of a person skilled in the art and it is therefore not considered necessary to describe it in further detail.

Another solution consists of the audiovisual content of the downloaded files being protected such that it can only be played if the system 53 authorizes it, and that the system 53 only authorizes playing it if it has been able to check that the user has seen the advertisements. In order to manage this authorization, the system 53 can use several methods, such as for example encrypting the content or using DRM technologies. A solution consists of the system 53 sending a message to the intermediary site 2 indicating that the advertisements have been shown in the computer 5, together with an identifier of the hardware of the computer 5, such as for example the serial number of the hard drive, and the intermediary site 2 sending back to the system 53 a message containing a key which allows the use of the content of the file but only in the computer 5. These types of protections or DRM technologies are widely known by a person skilled in the art.

Different techniques can be used in order for the system 53 to be able to check if the advertisements have been shown.

A first technique consists of the system 53 communicating with the audiovisual player in order to know the content that is being played. Some audiovisual players have specific development tools, such as for example the SDK (Software Development Kit) by Microsoft Media Player, which can be programmed to implement this communication. Another technique which can be used by the system 53 for performing said check consists of applying the technologies referred to as watermarking and perceptual hashing. Watermarking technology consists of adding to the audiovisual content marks that cannot be detected by the user, referred to as watermarks, which are detected when the content is played in an audiovisual player. Perceptual hashing technologies consist of generating a file, referred to as hash, which is different and unique for each audiovisual content played. These technologies are known by the person skilled in the art and it is therefore not considered necessary to explain them in further detail.

If a user does not have the system 53 installed in his computer when he attempts to play the audiovisual content of a downloaded file 1, the audiovisual player shows a message indicating to the user that it is necessary to install said system 53. This message is included in the downloaded file 1 and is the only part of said file 1 that the user can see if he does not install the system 53.

It can be seen that the process according to the invention is compatible with different downloading technologies, such as for example the BitTorrent file transfer protocol. In an embodiment of the invention, instead of directly downloading a complete file 1 from the download site 4, the user can download from said download site 4 a Torrent-type locator file, i.e. a file with a torrent extension containing information which allows locating nodes on the Internet which have already downloaded the file 1 or parts thereof and which can be used as a source for downloading said file 1 in parallel from a plurality of said nodes. In this case, the metadata containing the download identifying data is incorporated as metadata of the Torrent file. The advertising management system 53 can read this metadata in the Torrent file. An alternative advantageous solution consists of a Torrent file download application being executed in the user's computer 5, reading said metadata in the Torrent file and included it as metadata in the file 1 which has been downloaded. This solution has the advantage that it allows doing away with the Torrent file once the download of the file 1 has been completed, whereby it is possible to use standard processes such as those described above, regardless of if the file 1 has been downloaded directly or by means of a locator file.

The processes according to the invention which have been described above with the aid of Figures 1 to 6 relate to a first way of managing the advertisements according to which the file 1 which is downloaded in a user's computer 5 has advertisements 22, 23 incorporated therein, and an advertising management system 53 sees to it that it is impossible to play the audiovisual content of said file 1 if the advertisements 22, 23 contained in said file 1 or the new advertisements 24 which the system 53 has downloaded from the intermediary site 2 are not shown in the actual audiovisual player 52.

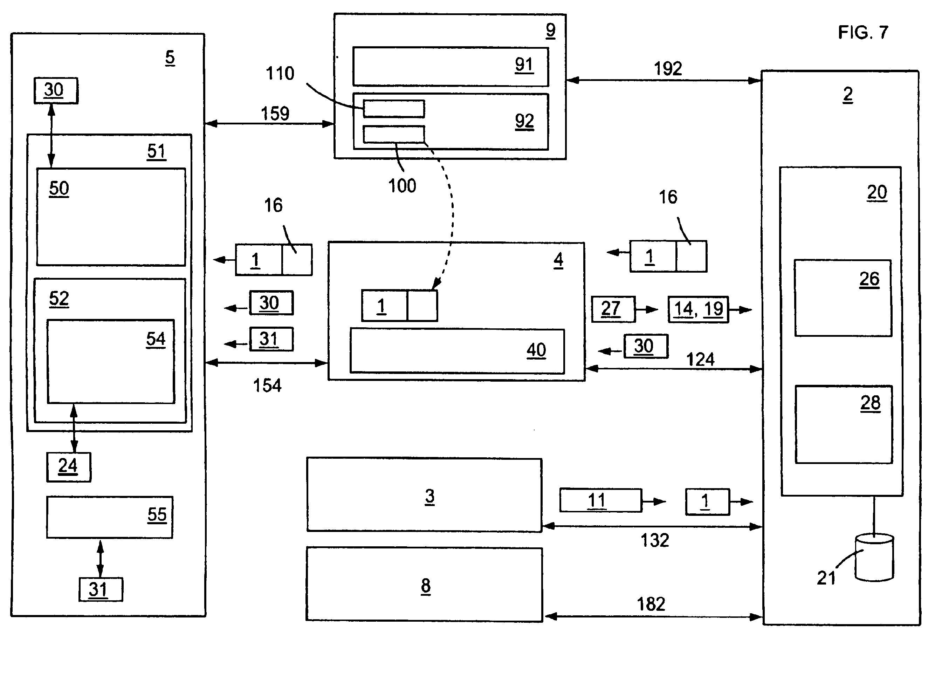

The invention also comprises a second way of managing the advertisements which is shown in Figure 7. Instead of being inserted in the file 1 which is downloaded in a user's computer 5, the advertisements are shown by the browser 50 of said computer 5 when it connects to the download site 4 to download the file 1. The download site 4 does not authorize downloading the file 1 as long as said advertisements have not been shown through said browser 50 in the computer 5. The process according to this second advertisement management form is described below in further detail in reference to Figure 7.

The same reference numbers have been used in Figure 7 as those used in Figure 1 to refer to the elements which are substantially the same.

The intermediary site 2 does not include the advertisements in the files 1 that it sends to the download site 4, but rather it separately delivers advertisements 30 associated to each file 1. When a user downloads one of these files 1 in the computer 5 using the browser 50 which is connected to the download site 4, said browser 50 shows the advertisements 30 associated to the file 1 and does not start to download the file 1 until said advertisements 30 have been shown in the browser 50. The advertisements 30 are preferably shown in the browser 50 using a streaming-type display technology, i.e. they are played in the screen of the computer 5 at the same time they are downloaded from the download site 4. Streaming-type display technologies are known by the person skilled in the art; they are implemented, for example, by applying the RTSP (Real Time Streaming Protocol) protocol. The advantage of using streaming-type technology is that the download site 4 knows when the advertisements 30 have been shown in the browser 50 of the computer 5 and only then will it allow the downloading of the file 1 to begin.

To prevent a user from being absent while the advertisements are shown in the browser 50, or canceling the effective display of said advertisements, for example by reducing the window of the browser 50, the invention provides an improvement which consists of when the showing of an advertisement has ended, the user must interact with the computer 5 so that it begins to show the following advertisement. This can be done, for example, by making each advertisement a different streaming session and by making the user click on the play button of the player of the browser 50 so that each streaming session, i.e. so that the showing of each advertisement begins. The download site 4 preferably does not authorize downloading the digital file 1 if the time elapsed between the end of a streaming session and the moment in which the user clicks on the play button to indicate that it begin the following streaming session exceeds a certain threshold. The user will thus pay attention to the advertisements in order to be able to act when each one of them ends.

Once the advertisements 30 have been shown in the browser 50 and the file 1 has subsequently been downloaded in the computer 5, the download site 4 sends the download identifying data 14, 19 to the intermediary site 2, identifying the referring site 9 and the download site 4 which have contributed to downloading the file 1, and the play information data 27 which allow identifying which advertisements associated to the audiovisual content have been shown. As can be seen, in this case the data 27 and 14, 19 is sent to the intermediary site 2 by the download site 4, and not by the system 53 of the computer 5 as occurred in the process according to Figure 1. It is therefore not necessary for the computer 5 to be equipped with a system 53 with these functionalities.

In order to prevent that the file 1 can be freely played after having been downloaded, the number of times the audiovisual content of said file 1 can be played and/or the time during which said audiovisual content can be played since the advertisements 30 were shown is limited. Furthermore, playing the audiovisual content of the file 1 is preferably only allowed in the computer 5 in which the advertisements 30 have been seen. To that end, a digital rights management or DRM system, which can be an application 55 installed in the computer 5, is used. The application 55 checks that in the computer in which the audiovisual content of the file 1 is going to be played there is a witness file which certifies that the advertisements 30 have been shown in said computer. This witness file can be for example a cookie 31 which has been transmitted to the computer 5 from the download site 4 or from the intermediary site 2 after the advertisements 30 have been shown. The application 55 will only allow playing the audiovisual content of the file 1 if it checks the existence of said witness file 31 in the computer 5. In the example shown in Figure 7, the download site 4 sends the cookie 31 to the computer 5 when the display of the advertisements 30 by means of streaming in the browser 50 has ended.

In the example shown in Figure 7, the application 55 is installed in the computer 5 and does not form part of the player 52. However, the invention also provides that the application 55 is integrated in the player 52 or in the browser 50. The application 55 can be, for example, a plug in for the browser 50.

The invention finally provides that the download site 4 can choose between the two advertisement management forms described above in reference to Figures 1 and 7, depending on whether or not the computer 5 downloading the files 1 is provided with an advertising management system 53. If the computer 53 is provided with a system 53, the download site chooses the first advertisement management form according to Figure 1, and in the event that it is not, it chooses the second way according to Figure 7.

The advertising management system 53 (in the first advertisement management form according to Figure 1) or the digital rights management application 55 (in the second advertisement management form according to Figure 7) sees to it that a user cannot see the audiovisual content of the file 1 in another computer different from the computer 5 in which said file 1 has been downloaded if the user does not see the advertisements associated to said audiovisual content.

In order to choose between these two advertisement management forms, it is necessary for the download site 4 to know whether or not the computer 53 is provided with a system 53. To that end, the system 53 causes the creation of a cookie which is stored in the computer 5 and transmitted to the download site 4 when said computer 5 connects to the site download 4 to download a file 1. When the download site 4 receives a download petition to download a file 1 from the browser 50 of the computer 5, the cookie that was stored in said computer 5 is transmitted to the download site 4 and the site then knows that there is a system 53 installed in the computer 5 and chooses the first advertisement management form (Figure 1). If the download site does not receive the cookie, it deduces that the computer 5 is not equipped with a system 53 and chooses the second advertisement management form (Figure 7).

As a person skilled in the art knows, cookies are created by Web servers and not by a computer application such as the system 53. In order for the system 53 to cause the creation of the cookie, the invention provides that the download site 4 has a webpage the purpose of which is to create said cookie, and that the system 53 accesses said webpage using the browser 50 of the computer 5. The system 53 does not create the cookie, rather it uses the browser 50 to access the webpage of the download site 4 which is who creates the cookie and sends it to the computer 5. The URL address of said webpage of the download site 4 forms part of the identifying data 14 of the download site 4 which is incorporated in the file 1.

As the person skilled in the art will easily understand, even though the embodiments herein described relate to a computer, websites and webpages operating on the Internet, the invention can also be applied to other communications systems, such as for example a system acting in a communications network for cellular telephones or other similar devices. In this case, instead of a computer, the users use a cellular telephone to download and play the files with audiovisual content, and the different sites (intermediary site, referring sites, download sites, proprietary content sites and advertiser sites) operate in said communications network for cellular telephones.

## Claims

1. A process for the on-line distribution of audiovisual contents with advertisements,
- an intermediary site (2) receives a digital file (1) with audiovisual content on-line and makes a selection of referring sites (9) suitable for offering said digital file (1) on-line to a user;
- said intermediary site (2) receives advertisements to be shown from advertiser sites; **characterized in that**:
- said intermediary site (2) makes a selection of said advertisements and assigns to said digital file (1) associated advertisements (22, 23, 24, 30);
- causing the digital file (1) and associated advertisements (22, 23, 24, 30) to be downloaded to the user equipment (5) after the user equipment (5) has selected the digital file (1) from a referring site (9);
- after it is checked that said associated advertisements (22, 23, 24, 30) have been shown in said equipment (5) an audiovisual content player (52) provided in said equipment (5) plays the audiovisual content of said downloaded digital file (1), after said check receiving in said intermediary site (2) identifying data comprising at least identifying data (19) of said referring site (9), and play information data (27), said identifying data comprising at least information which allows identifying said associated advertisements (22, 23, 24, 30);
- based on said identifying data (19) of the referring site (9), said intermediary site (2) performs an action to remunerate said referring site (9) and, based on said play information data (27), said intermediary site (2) performs an action to receive a remuneration from the advertiser sites (8) that had provided said associated advertisements (22, 23, 24, 30).

2. A process according to claim 1, **characterized in that** said identifying data is incorporated to said digital file (1) before downloading said digital file (1).

3. A process according to claim 2, **characterized in that** said identifying data is incorporated to said digital file (1) as file properties metadata of said digital file (1).

4. A process according to claims 2 or 3, **characterized in that** said associated advertisements (22, 23) are incorporated to said digital file (1) before it is downloaded.

5. A process according to any of the preceding claims, **characterized in that** said intermediary site (2) provides on-line to said referring sites (9) links (100) to be installed in said referring sites (9), such that when a user activates one of said links (100) in one of said referring sites (9) said user is redirected to a download site (4) to download, from said download site (4), said digital file (1); and **in that** said identifying data, which is transmitted on-line to said intermediary site (2) after having shown said associated advertisements (22, 23, 24) in said equipment (5), comprises identifying data (14) of said download site (4).

6. A process according to any of the preceding claims, **characterized in that** in order to make an automatic selection of the advertisements provided by the advertiser sites (8) and assign them to each digital file (1), said intermediary site (2) receives on-line, together with said digital files (1), information (11) about the audiovisual content category of each digital file (1), and said intermediary site (2) is provided with an advertisement auction management module (28) wherein the different advertiser sites (8) offer on-line a price for their advertisements for each audiovisual content category.

7. A process according to any of the preceding claims, **characterized in that** said intermediary site (2) receives on-line said digital files (1) from proprietary content sites (3) and, after the audiovisual content of said downloaded digital file (1) has been played in said equipment (5), said intermediary site (2) receives on-line said play information data (27) further comprising information which allows identifying said downloaded digital file (1), and said intermediary site (2) performs an automatic action to remunerate the proprietary content site (3) from which it had received said downloaded digital file (1).

## Patentansprüche

1. Verfahren für den Online-Vertrieb audiovisueller Inhalte mittels Werbeanzeigen, eine Vermittlerseite (2) empfängt online eine digitale Datei (1) mit audiovisuellem Inhalt und trifft eine Auswahl von referenzierten Webseiten (9), die sich dazu eignen, einem Anwender die digitale Datei (1) online anzubieten;
die Vermittlerseite (2) erhält die anzuzeigenden Werbeanzeigen von den Webseiten der Inserenten, **dadurch gekennzeichnet, dass**
die Vermittlerseite (2) eine Auswahl der Anzeigen trifft und der digitalen Datei (1) die zugehörigen Werbeanzeigen (22, 23, 24, 30) zuweist;
das Herunterladen der digitalen Datei (1) und der zugehörigen Werbeanzeigen (22, 23, 24, 30) auf das Anwendergerät (5) veranlasst wird, nachdem das Anwendergerät (5) die digitale Datei (1) von einer referenzierten Webseite (9) ausgewählt hat;
nachdem überprüft wurde, dass die zugehörigen Werbeanzeigen (22, 23, 24, 30) auf dem Anwendergerät (5) angezeigt wurden, der audiovisuelle Inhalt der heruntergeladenen digitalen Datei (1) mittels eines auf dem Anwendergerät (5) installierten Players für audiovisuelle Inhalte (52) abgespielt wird; nach Überprüfung, Identifizierungsdaten, die zumindest aus Identifizierungsdaten (19) der referenzierten Webseite (9) und Informationsdaten (27) zum Abspielen bestehen, von der Vermittlerseite (2) empfangen werden, wobei die Identifizierungsdaten zumindest aus Informationen bestehen, die eine Identifizierung der zugehörigen Werbeanzeigen (22, 23, 24, 30) ermöglichen;
basierend auf den Identifizierungsdaten (19) der referenzierten Webseite (9), die Vermittlerseite (2) eine Aktion zur Vergütung der referenzierten Website (9) ausführt und, basierend auf die Informationsdaten (27) zum Abspielen, die Vermittlerseite (2) eine Aktion ausführt, um von den Webseiten (8) der Inserenten, welche die zugehörigen Werbeanzeigen (22, 23, 24, 30) zur Verfügung gestellt haben, eine Vergütung zu erhalten.

2. Verfahren nach Anspruch 1, **dadurch gekennzeichnet, dass** die Identifizierungsdaten in die digitale Datei (1) eingebettet sind, bevor die digitale Datei (1) heruntergeladen wird.

3. Verfahren nach Anspruch 2, **dadurch gekennzeichnet, dass** die Identifizierungsdaten als Metadaten von Dateieigenschaften der digitalen Datei (1) in die digitale Datei (1) eingebettet sind.

4. Verfahren nach Anspruch 2 oder 3, **dadurch gekennzeichnet, dass** zugehörigen Werbeanzeigen (22, 23) in die digitale Datei (1) eingebettet sind, bevor diese heruntergeladen wird.

5. Verfahren nach einem der vorstehenden Ansprüche, **dadurch gekennzeichnet, dass** die Vermittlerseite (2) an die referenzierten Webseiten (9) online Links (100) übermittelt, die auf den referenzierten Webseiten (9) installiert werden, so dass beim Aktivieren der Links (100) durch den Anwender auf einer der referenzierten Webseiten (9), der Anwender auf eine Download-Seite (4) weitergeleitet wird, um von dieser Download-Seite (4) die digitale Datei (1) herunterzuladen, und die Identifizierungsdaten, die online an die Vermittlerseite (2) übertragen werden, nachdem die zugehörigen Werbeanzeigen (22, 23, 24) auf dem Gerät (5) angezeigt wurden, die Identifizierungsdaten (14) der Download-Seite (4) beinhalten.

6. Verfahren nach einem der vorstehenden Ansprüche, **dadurch gekennzeichnet, dass** um die automatische Auswahl von Werbeanzeigen zu treffen, die von der Webseite (8) des Inserenten zur Verfügung gestellt werden, und sie den digitalen Dateien (1) zuzuordnen, die Vermittlerseite (2) online zusammen mit den digitalen Dateien (1) Informationen (11) zur Kategorie der digitalen Inhalte jeder digitalen Datei (1) erhält und der Vermittlerseite (2) ein Auktionsmodul zur Verwaltung der Werbeanzeigen (28) zur Verfügung gestellt wird, bei dem die verschiedenen Inserenten-Webseiten (8) einen Online-Preis für ihre Werbeanzeigen für jede Kategorie audiovisueller Inhalte anbieten.

7. Verfahren nach einem der vorstehenden Ansprüche, **dadurch gekennzeichnet, dass** die Vermittlerseite (2) die digitalen Dateien (1) von Webseiten (3) mit geschützten Inhalten erhält und, nach Abspielen des audiovisuellen Inhalts der digitalen Datei (1) auf dem Gerät (5), die Vermittlerseite (2) online die Informationsdaten (27) zum Abspielen erhält, die zudem Informationen zur Identifizierung der heruntergeladenen digitalen Datei (1) enthalten, und die Vermittlerseite (2) eine automatische Aktion zur Vergütung der Webseite (3) mit geschützten Inhalten, von der sie die heruntergeladene digitale Datei (1) erhalten hat, ausführt.

## Revendications

1. Procédé pour la distribution en ligne de contenu audiovisuel avec publicités,
un site intermédiaire (2) reçoit un fichier numérique (1) avec un contenu audiovisuel en ligne et effectue une sélection de sites de référence (9) appropriés pour offrir ledit fichier numérique (1) en ligne à un utilisateur ;
ledit site intermédiaire (2) reçoit des publicités destinées à être montrées à partir de sites publicitaires ; **caractérisé en ce que** :
ledit site intermédiaire (2) effectue une sélection desdites publicités et attribue audit fichier numérique (1) des publicités associées (22, 23, 24, 30) ;
on fait en sorte que le fichier numérique (1) et les publicités associées (22, 23, 24, 30) soient téléchargés vers l'équipement de l'utilisateur (5) après que l'équipement de l'utilisateur (5) a sélectionné le fichier numérique (1) sur un site de référence (9) ;
après avoir contrôlé que lesdites publicités associées (22, 23, 24, 30) ont été montrées sur ledit équipement (5) un lecteur de contenu audiovisuel (52) installé sur ledit équipement (5) lit le contenu audiovisuel dudit fichier numérique téléchargé (1), après contrôle, la réception dans ledit site intermédiaire (2) de données d'identification comprenant au moins des données d'identification (19) dudit site de référence (9), et
des données d'informations de lecture (27), lesdites données d'identification comprenant au moins des informations qui permettent d'identifier lesdites publicités associées (22, 23, 24, 30) ;
sur base desdites données d'identification (19) du site de référence (9), ledit site intermédiaire (2) exécute une action pour rémunérer ledit site de référence (9) et, sur base desdites données d'informations de lecture (27), ledit site intermédiaire (2) exécute une action de manière à recevoir une rémunération des sites de publicitaires (8) qui avaient fourni lesdites publicités associées (22, 23, 24, 30).

2. Procédé selon la revendication 1, **caractérisé en ce que** lesdites données d'identification sont incorporées audit fichier numérique (1) avant le téléchargement dudit fichier numérique (1).

3. Procédé selon la revendication 2, **caractérisé en ce que** lesdites données d'identification sont incorporées audit fichier numérique (1) en tant que métadonnées de propriétés de fichier dudit fichier numérique (1).

4. Procédé selon les revendications 2 ou 3, **caractérisé en ce que** lesdites publicités associées (22, 23) sont incorporées audit fichier numérique (1) avant qu'il soit téléchargé.

5. Procédé selon l'une quelconque des revendications précédentes, **caractérisé en ce que** ledit site intermédiaire (2) fournit en ligne auxdits sites de référence (9) des liens (100) destinés à être installés dans lesdits sites de référence (9), de telle sorte que lorsqu'un utilisateur active un desdits liens (100) dans un desdits sites de référence (9) ledit utilisateur est renvoyé vers un site de téléchargement (4) pour télécharger, à partir dudit site de téléchargement (4), ledit fichier numérique (1) ; et **en ce que** lesdites données d'identification, qui sont transmises en ligne audit site intermédiaire (2) après avoir montré lesdites publicités associées (22, 23, 24) dans ledit équipement (5), comprennent des données d'identification (14) dudit site de téléchargement (4).

6. Procédé selon l'une quelconque des revendications précédentes, **caractérisé en ce qu'**afin de faire une sélection automatique des publicités fournies par les sites de publicitaires (8) et les affecter à chaque fichier numérique (1), ledit site intermédiaire (2) reçoit en ligne, conjointement avec lesdits fichiers numériques (1), des informations (11) concernant la catégorie de contenu audiovisuel de chaque fichier numérique (1), et ledit site intermédiaire (2) est pourvu d'un module de prise en charge d'enchères de publicité (28) ou les différents sites de publicitaires (8) offrent en ligne un prix pour leurs publicités pour chaque catégorie de contenu audiovisuel.

7. Procédé selon l'une quelconque des revendications précédentes, **caractérisé en ce que** ledit site intermédiaire (2) reçoit en ligne lesdits fichiers numériques (1) de sites de contenu propriétaire (3) et, après que le contenu audiovisuel dudit fichier numérique téléchargé (1) a été lu dans ledit équipement (5), ledit site intermédiaire (2) reçoit en ligne lesdites données d'informations de lecture (27) comprenant en outre des informations qui permettent d'identifier ledit fichier numérique téléchargé (1), et ledit site intermédiaire (2) exécute des enchères automatiques pour rémunérer le site de contenu propriétaire (3) duquel il avait reçu ledit fichier numérique téléchargé (1).
